(19)

**Europäisches Patentamt**

**European Patent Office**

**Office européen des brevets**

(11)  **EP 3 953 583 B1**

(12)  # EUROPÄISCHE PATENTSCHRIFT

(45) Veröffentlichungstag und Bekanntmachung des Hinweises auf die Patenterteilung:
**22.06.2022  Patentblatt 2022/25**

(21) Anmeldenummer: **21729238.2**

(22) Anmeldetag: **21.05.2021**

(51) Internationale Patentklassifikation (IPC):
***F04B 39/06*** *(2006.01)*

(52) Gemeinsame Patentklassifikation (CPC):
**F04B 39/06; F04B 39/066; F04B 49/06; F04B 49/065**

(86) Internationale Anmeldenummer:
**PCT/EP2021/063638**

(87) Internationale Veröffentlichungsnummer:
**WO 2021/249746 (16.12.2021 Gazette 2021/50)**

(54) **KOMPRESSORSYSTEM UND VERFAHREN ZUR STEUERUNG EINER KÜHLEINRICHTUNG EINES KOMPRESSORSYSTEMS**

COMPRESSOR SYSTEM AND METHOD FOR CONTROLLING A COOLING DEVICE OF A COMPRESSOR SYSTEM

SYSTÈME DE COMPRESSEUR ET PROCÉDÉ DE COMMANDE D'UN DISPOSITIF DE REFROIDISSEMENT D'UN SYSTÈME DE COMPRESSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2020   DE 102020115300**

(43) Veröffentlichungstag der Anmeldung:
**16.02.2022   Patentblatt 2022/07**

(73) Patentinhaber: **KNORR-BREMSE Systeme für Schienenfahrzeuge GmbH 80809 München (DE)**

(72) Erfinder:
• **KRAMLICH, Adrian 80807 München (DE)**

• **LANGE, Stefan 81545 München (DE)**

(74) Vertreter: **Prüfer & Partner mbB Patentanwälte · Rechtsanwälte Sohnckestraße 12 81479 München (DE)**

(56) Entgegenhaltungen:
EP-A1- 2 949 939         EP-B1- 2 949 939
DE-A1-102013 113 557     DE-A1-102016 105 145
US-A1- 2004 244 393      US-A1- 2011 107 790
US-A1- 2013 129 480

**Beschreibung**

Die Erfindung betrifft ein Kompressorsystem, ein Verfahren zur Steuerung einer Kühleinrichtung eines Kompressorsystems sowie ein dafür vorgesehenes Computerprogrammprodukt.

Kompressoren werden in einer Vielzahl technischer Anwendungen eingesetzt. In modernen Schienenfahrzeugen, als ein Beispiel eines solchen Einsatzgebietes, kommt der Reduzierung von Schallemissionen eine immer größere Bedeutung zu. Gleichzeitig muss der Temperaturhaushalt des Kompressors im gesamten Temperaturspektrum, bei Schienenfahrzeugen beispielsweise zwischen - 40°C und + 50°C, und auch in engen Einbauräumen gewährleistet werden.

Herkömmliche Kompressorsysteme von Druckluftkompressoren in Schienenfahrzeugen umfassen einen Kompressor sowie gegebenenfalls einen Nachkühler oder, wie bei zweistufigen Kolbenkompressoren, einen Zwischen und einen Nachkühler. Der Kompressor kann als Kolbenmaschine oder auch als Rotationsverdichter, beispielsweise als Schrauben- oder Scrollkompressor, ausgeführt werden und wird überwiegend luftgekühlt. Die Luftkühlung erfolgt dabei über einen oder mehrere Lüfter, der bzw. die durch mechanische oder signaltechnische Kopplung korrespondierend zur Verdichterdrehzahl betrieben wird bzw. werden.

Bei hohen Umgebungstemperaturen und ungünstigen Raumverhältnissen kommt es dennoch häufig zu einer Überhitzung des Kompressors. Umgekehrt besteht durch diese direkte Koppelung durch die damit eingebrachte hohe Kühlleistung bei niedrigen Ansaugtemperaturen und kurzen Betriebszeiten das Risiko einer internen Eisbildung bzw. Kondensatansammlungen und damit einhergehenden Betriebseinschränkungen sowie erhöhtem Verschleiß und erhöhter Korrosion. Hieraus ergibt sich ein Zielkonflikt der mit herkömmlichen Kühlsystemen aufgrund der Kopplung der Kühlerlufterdrehzahl an die Verdichterdrehzahl nicht gelöst werden kann.

Die US 2013/0129480 A1 offenbart in diesem Zusammenhang beispielsweise eine Kompressionsvorrichtung zum Kühlen mehrerer Geräte unter Verwendung eines einzigen Lüfters. Eine obere Grenztemperatur, eine erste Verstärkung, die in einem Fall angewandt wird, in dem ein Ansaugungseinstellventil geöffnet ist, und eine zweite Verstärkung, die in einem Fall angewandt wird, in dem das Ansaugungseinstellventil geschlossen ist, werden im Voraus für jeden von mehreren Temperaturdetektoren eingestellt, die an verschiedenen Stellen der Kompressionsvorrichtung vorgesehen sind, und für jeden der mehreren Temperaturdetektoren wird eine Differenz zwischen einem erfassten Wert und der oberen Grenztemperatur berechnet, und eine Drehzahl des Lüfters wird auf der Grundlage des kleinsten Wertes in den Differenzen bestimmt, und die erste Verstärkung oder die zweite Verstärkung wird für den Temperaturdetektor mit der kleinsten Differenz eingestellt.

Die US 2004/0244393 A1 betrifft eine Kompressoranordnung mit einem oder mehreren Kompressoren, die mit einer Kompressorantriebseinrichtung verbunden sind. Ein Kühlsystem ist stromabwärts des Kompressors angeordnet und umfasst mindestens einen Luftumwälzer, beispielsweise einen Ventilator oder ein Gebläse, und mindestens einen Wärmetauscher. Der Luftumwälzer ist mit einem drehzahlvariablen Antrieb verbunden, dessen Drehzahl unabhängig vom Kompressorantrieb eingestellt werden kann. Ein oder mehrere Sensoren sind mit dem Umwälzantrieb verbunden. Die Sensoren erfassen die gewünschten Variablen, und die Drehzahl des Umwälzantriebs ist in Reaktion auf die in Echtzeit erfassten Bedingungen einstellbar.

Die DE 10 2013 113 557 A1 offenbart ein Kompressorsystem mit einer Regelungseinrichtung, wobei die Regelungseinrichtung zumindest mittelbar eine stromabwärts des Kompressors angeordnete Kühlereinheit mit Kühlerlüfter ansteuert, wobei eine Drehzahl des Kühlerlüfters kontinuierlich durch die Regelungseinrichtung einstellbar ist.

Zudem kann der Betrieb der Kühleinrichtung den Temperaturhaushalt des Kompressorsystems derart beeinflussen, dass sich für eine Systemkomponente optimierte Bedingungen ergeben, während insgesamt betrachtet jedoch unvorteilhafte Betriebszustände erzielt werden.

In Anbetracht der vorstehenden Ausführungen ist es somit Aufgabe der Erfindung, ein Kompressorsystem, ein Verfahren zur Steuerung einer Kühleinrichtung eines Kompressorsystems sowie ein Computerprogrammprodukt zur Ausführung des Verfahrens bereitzustellen, die eine verbesserte Kühlung des Kompressorsystems ermöglicht.

Die Aufgabe wird durch ein Kompressorsystem, ein Verfahren zur Steuerung einer Kühleinrichtung eines Kompressorsystems sowie ein Computerprogrammprodukt gemäß den unabhängigen Ansprüchen gelöst. Vorteilhafte Weiterbildungen der Erfindung sind in den abhängigen Ansprüchen enthalten.

Erfindungsgemäß weist ein Kompressorsystem einen Kompressor, eine Kühleinrichtung und eine Steuerungsvorrichtung auf, wobei die Steuerungsvorrichtung dazu konfiguriert ist, die Kühleinrichtung unabhängig vom Betrieb des Kompressors anzusteuern und eine Steuergröße eines Stellglieds und/oder das Stellglied für die Ansteuerung der Kühleinrichtung dynamisch anpassen zu können.

Die Kühleinrichtung des Kompressorsystems kann somit unabhängig von einer Verdichterdrehzahl des Kompressors abgestimmt auf die für einen optimalen Betrieb notwendige Kühlleistung betrieben werden. Dies kann über eine separate signaltechnische Ansteuerung eines eigenständigen energetischen Antriebs der Kühleinrichtung und/oder beispielsweise auch bei mechanischer Kopplung der Kühleinrichtung an den Kompressor durch die Verwendung schaltbarer Übersetzungen implementiert werden. Eine separate signaltechnische Ansteuerung der Kühleinrichtung bietet zudem den Vorteil, dass die Ansteuerung in einem solchen Fall auch unabhängig davon ist, ob der Kompressor grundsätzlich ein- oder ausgeschaltet ist. Je nach vorzusehenden Ansteuerungsstufen/-varianten kann eine mechanische Kopplung auch aufgrund der damit verbundenen Komplexität nicht mehr handhabbar sein.

Eine separate signaltechnische Ansteuerung bedingt dabei nicht zwingend separate Steuerungsvorrichtungen für den Kompressor und die Kühleinrichtung, sondern ist auf eine unabhängige Signalweitergabe und einen unabhängigen Signalinhalt gerichtet. Eine solche Unabhängigkeit wird nicht dadurch begrenzt, dass bei der Signalerzeugung zur Ansteuerung der Kühleinrichtung ggf. auch Kompressorbetriebszustände berücksichtigt werden. Beispielsweise kann eine grundsätzlich unabhängige Ansteuerung erfolgen, wobei aber ab einer bestimmten Verdichterdrehzahl zumindest ein Grundbetrieb der Kühleinrichtung vorgesehen ist.

Der Betrieb der Kühleinrichtung kann auch über eine separate signaltechnische Ansteuerung erfolgen, wobei in Betriebszuständen, in denen der Kompressor parallel zur Kühleinrichtung betrieben wird, eine mechanische Kopplung an die Verdichterdrehzahl den Betrieb der Kühleinrichtung unterstützen kann. In diesem Sinne ist die Ansteuerung der Kühleinrichtung immer noch unabhängig, wobei die Kopplung lediglich eine wählbare Antriebsfunktion oder Antriebsunterstützung darstellt. Mit anderen Worten kann beispielsweise die Kühleinrichtung in bestimmten Betriebszuständen oder bei einer zur Kompressordrehzahl korrespondierenden geforderten Antriebsleitung auch mechanisch an den Kompressor gekoppelt und somit über diesen angetrieben werden, um den Energieverbrauch zu reduzieren. Dennoch bietet das Kompressorsystem die Möglichkeit der unabhängigen Ansteuerung.

Durch die vom Betrieb des Kompressors unabhängige Ansteuerung der Kühleinrichtung kann die Kühleinrichtung bedarfsweise zu- und abgeschaltet werden. Hierdurch können Überhitzungen und/oder Kondensatansammlungen vermieden oder zumindest vermindert werden. Insbesondere ist eine solche Kühleinrichtung bei wiederkehrenden Betriebsszenarien präventiv einsetzbar.

Die vom Betrieb des Kompressors unabhängige Ansteuerung der Kühleinrichtung kann jedoch verschiedenen, teils gegenläufigen Optimierungskriterien unterliegen, deren Gewichtung je nach Betriebszustand nicht gleichbleibend sein muss. Entsprechend ist die Steuerungsvorrichtung dazu konfiguriert, eine Steuergröße eines Stellglieds und/oder das Stellglied für die Ansteuerung der Kühleinrichtung dynamisch anpassen zu können.

Als Steuergrößen werden die Größen verstanden, auf deren Basis das Stellglied die Kühleinrichtung ansteuert bzw. Einfluss auf die Stellgröße nimmt. In diesem Zusammenhang wird unter einer dynamischen Anpassung der Steuergröße eines Stellglieds verstanden, dass bei zumindest zwei verfügbaren Steuergrößen die Auswahl der einen, der anderen oder beider Steuergrößen anpassbar ist. Die Auswahl der heranzuziehenden Steuergröße oder Steuergrößen kann durch deren jeweiligen Wert bedingt und/oder an bestimmte Betriebszustände gekoppelt sein.

Die zur dynamischen Anpassung der Steuergröße alternative oder ergänzende dynamische Anpassung des Stellglieds betrifft dann tatsächliche Umwandlung der Steuergröße oder Steuergrößen in die Stellgröße. Sofern beispielsweise nur eine Steuergröße vorab ausgewählt wird, so kann in Abhängigkeit des Werts der Steuergröße und/oder des jeweiligen Betriebszustands über die Anpassung des Stellglieds die Stellgröße beeinflusst werden. Die dynamische Anpassung bezieht sich dabei nicht auf die mögliche Veränderung der Stellgröße in Abhängigkeit der Steuergröße gemäß einer vorgegebenen Übertragungsfunktion, sondern auf die Anpassung der Übertragungsfunktion selbst.

Beispielsweise können mehrere Größen für die Ansteuerung der Kühleinrichtung herangezogen werden, wobei die Steuerungsvorrichtung beispielsweise nur eine der Größen als Steuergröße auswählt und die Übertragungsfunktion des Stellglieds konstant gehalten wird. In einem anderen Beispiel werden alle Größen gleichsam als Steuergrößen verwendet, aber je nach Wert zumindest einer der Steuergrößen die Übertragungsfunktion angepasst. Entsprechende Kombinationen der Anpassung der Steuergröße und des Stellglieds wären ebenfalls als Beispiele zu nennen.

Somit kann das Kompressorsystem, insbesondere der Kompressor selbst, gemäß den Steuergrößen im optimalen Betriebspunkt betrieben werden. Dies wirkt sich nicht nur positiv auf die Effizienz und Lebensdauer des Kompressorsystems aus, sondern kann auch eine Überlastung nachgeordneter Komponenten vermeiden, wodurch auch deren Effizienz und Lebensdauer erhöht werden können.

Das Kompressorsystem kann insbesondere für Schienenfahrzeuge in vorteilhafter Weise eingesetzt werden.

Zudem ist die Steuerungsvorrichtung konfiguriert, zumindest zwei Steuergrößen zu empfangen, wobei eine Steuergröße als Primärsteuergröße und die andere Steuergröße als Sekundärsteuergröße festlegbar ist, um die Kühleinrichtung in Abhängigkeit der Primärsteuergröße und/oder Sekundärsteuergröße anzusteuern.

Als Primärsteuergröße wird die Steuergröße festgelegt, die gemäß einer vorgegebenen Steuerungslogik der Steuerungsvorrichtung zunächst heranzuziehen ist. Sofern eine solche Primärsteuergröße je nach vorbestimmten Bedingungen keinen Ansteuerungsbedarf bedingt, wird die Sekundärsteuergröße für sich genommen und/oder auch nochmals unter Bezugnahme auf die Primärsteuergröße betrachtet. Mit anderen Worten wird die Primärsteuergröße zeitlich zuerst und somit immer bewertet, während die Sekundärsteuergröße nur dann Einfluss auf die Ansteuerung nehmen muss, wenn die Primärsteuergröße die Ansteuerung nicht alleine bedingt.

Dies bedingt einerseits eine auf zumindest zwei Steuergrößen optimierte Ansteuerung der Kühleirichtung, wobei eine erste Gewichtung durch Auswahl einer Primärsteuergröße und damit verbundener Entscheidungskriterien die Steuerungsvorrichtung dahingehend vereinfachen kann, dass nicht permanent zwei Größen auszuwerten bzw. die Übertragungsfunktonen der Stellglieder die jeweiligen Auswertungsergebnisse berücksichtigen müssen. Die Übertragungsfunktionen können beispielsweise kaskadiert werden. Damit geht gleichzeitig einher, dass auch nicht permanent Primärsteuergröße und Sekundärsteuergröße erfasst werden müssen, sondern lediglich bedarfsweise erfasst werden können. Beispielsweise müssen keine Sekundärsteuergrößen erfasst werden, solange schon die Primärsteuergröße für sich genommen eine Ansteuerung der Kühleinrichtung bedingt. Dies reduziert den Energiebedarf sowie die zu übertragende Datenmenge.

Dabei ist die Steuerungsvorrichtung dazu konfiguriert, die Kühleinrichtung in Abhängigkeit der Primärsteuergröße anzusteuern, wenn die Primärsteuergröße oberhalb eines vorbestimmten oberen Primärsteuergrößengrenzwerts liegt, und/oder die Kühleinrichtung in Abhängigkeit der Sekundärsteuergröße anzusteuern, wenn die Primärsteuergröße unterhalb eines vorbestimmten oberen Primärsteuergrößengrenzwerts liegt oder gleich diesem ist und gleichzeitig die Sekundärsteuergröße oberhalb eines vorbestimmten Sekundärsteuergrößengrenzwerts liegt, und/oder die Kühleinrichtung (40) in Abhängigkeit der Primärsteuergröße und der Sekundärsteuergröße anzusteuern, wenn die Primärsteuergröße unterhalb des vorbestimmten oberen Primärsteuergrößengrenzwerts liegt oder gleich diesem ist und die Sekundärsteuergröße unterhalb des vorbestimmten Sekundärsteuergrößengrenzwerts liegt.

Die Primärsteuergröße repräsentiert somit in einem Fall, in dem die Kühleinrichtung in Abhängigkeit der Primärsteuergröße angesteuert werden soll, wenn die Primärsteuergröße oberhalb eines vorbestimmten oberen Primärsteuergrößengrenzwerts liegt, eine Größe, die ungeachtet weiterer Bedingungen eine Ansteuerung der Kühleinrichtung erfordert. Mit anderen Worten wird über die über die Primärsteuergröße repräsentierte Größe ein Zustand betrachtet, in dem die Kühleinrichtung nicht schon aufgrund anderer Größen ausreichend angesteuert würde.

Wird ein entsprechend vorbestimmter oberer Primärsteuergrößengrenzwert überschritten, so wird die Kühleinrichtung, wie bereits angeführt, in Abhängigkeit der Primärsteuergröße angesteuert. Hierzu kann in Abhängigkeit der jeweiligen Werte der Primärsteuergröße entweder das Stellglied bzw. dessen Übertragungsfunktion angepasst werden und/oder die Primärsteuergröße geht direkt in die Übertragungsfunktion ein.

Alternativ oder ergänzend kann die Steuerungsvorrichtung gemäß obiger Ausgestaltung die Kühleinrichtung in Abhängigkeit der Sekundärsteuergröße ansteuern, wenn die Primärsteuergröße unterhalb eines vorbestimmten oberen Primärsteuergrößengrenzwerts liegt oder gleich diesem ist und gleichzeitig die Sekundärsteuergröße oberhalb eines vorbestimmten Sekundärsteuergrößengrenzwerts liegt.

Demnach berücksichtigt die Steuerungsvorrichtung sowohl die Primärsteuergröße als auch die Sekundärsteuergröße, wobei jedoch Letztere ausschlaggebend für das Stellglied bzw. die Übertragungsfunktion ist. In einer ergänzenden Variante kann somit von einer kaskadierten Ansteuerung der Kühleinrichtung gesprochen werden, während eine alternative Variante beispielsweise in Kombination mit anderen Kühleinrichtungen genutzt werden kann.

Weiterhin alternativ oder ergänzend kann die Steuerungsvorrichtung gemäß obiger Ausgestaltung die Kühleinrichtung in Abhängigkeit der Primärsteuergröße und der Sekundärsteuergröße ansteuern, nämlich dann, wenn die Primärsteuergröße unterhalb des vorbestimmten oberen Primärsteuergrößengrenzwerts liegt oder gleich diesem ist und die Sekundärsteuergröße ebenfalls unterhalb des vorbestimmten Sekundärsteuergrößengrenzwerts liegt. Somit berücksichtigt die Steuerungsvorrichtung auch hier sowohl die Primärsteuergröße als auch die Sekundärsteuergröße, wobei jedoch beide Steuergrößen ausschlaggebend für das Stellglied bzw. die Übertragungsfunktion sind.

In einer Ausgestaltung ist die Steuerungsvorrichtung konfiguriert, eine Kühlfluidvolumenstromrate, insbesondere eine Kühlluftvolumenstromrate, als Stellgröße vorzugeben.

Die Kühleinrichtung verfügt somit über eine Anpassungseinrichtung, die ein pro Zeiteinheit zur Kühlung bereitgestelltes Fluidvolumen variieren kann. Beispielsweise kann hierzu eine Durchflussmenge eines Fluids über eine Ventilstellung oder eine Generierungsmenge über eine Antriebsleistung, wie eine Durchflussmenge gemäß einer Lüfterdrehzahl, entsprechend angesteuert werden. Aufgrund ihrer guten Verfügbarkeit stellt die Verwendung von Luft als Kühlmittel eine einfache und kostengünstige Lösung dar. Auch wenn Luft nicht alleinig als Kühlmittel verwendet wird, kann zumindest durch Variation der Luftdurchflussmenge die Kühlung in einfacher Weise angepasst werden.

Alternativ oder ergänzend können als Stellgröße auch die Kühlfluidtemperatur und/oder Ein- und Ausschaltzeitpunkte der Kühleinrichtung genutzt werden.

Insbesondere ist die Steuerungsvorrichtung dazu konfiguriert, die Kühleinrichtung derart anzusteuern, dass die Kühleinrichtung mit maximaler Leistung betrieben wird, wenn die Primärsteuergröße oberhalb eines kritischen oberen Primärsteuergrößengrenzwerts liegt, der insbesondere oberhalb des vorbestimmten oberen Primärsteuergrößengrenzwerts liegt.

Demnach wird das Stellglied derart angepasst, dass die Stellgröße zur maximalen Leistung der Kühleinrichtung korrespondiert. Die maximale Leistung der Kühleinrichtung kann der technisch durch die Kühleinrichtung bereitstellbaren maximalen Leistung oder auch einer vorbestimmten maximalen Leistung entsprechen. Eine vorbestimmte maximale Leistung kann beispielsweise eine Leistung sein, die unterhalb der technisch bereitstellbaren Leistung liegt, aber für einen Langzeitbetrieb zu bevorzugen ist oder auch bei geringerem Energieverbrauch als ausreichend erachtet wird.

Grundsätzlich kann der kritische obere Primärsteuergrößengrenzwert gleich dem vorbestimmten oberen Primärsteuergrößengrenzwert sein, wobei dann die Kühleinrichtung immer mit maximaler Leistung betrieben wird, wenn der vorbestimmte obere Primärsteuergrößengrenzwert überschritten wird. Dies kann sowohl aus Effizienzgründen wie auch aufgrund von Nachteilen bei zu hoher Kühlleistung unerwünscht sein, so dass der kritische obere Grenzwert insbesondere oberhalb des vorbestimmten oberen Primärsteuergrößengrenzwerts liegt.

Alternativ oder ergänzend ist die Steuerungsvorrichtung dazu konfiguriert, die Kühleinrichtung derart anzusteuern, dass die Kühleinrichtung maximal bis zum Erreichen mit einer ihrer maximalen Leistung zur Primärsteuergröße proportionalen Leistung betrieben wird, wenn die Primärsteuergröße oberhalb des vorbestimmten oberen Primärsteuergrößengrenzwerts liegt.

Die Stellgröße kann sich somit aus der mit einem Proportionalfaktor multiplizierten Primärsteuergröße ergeben, also gemäß der Formel Stellgröße = a * Primärsteuergröße mit a als Primärsteuergrößenproportionalitätsfaktor. Entspricht die Stellgröße der Leistung der Kühleinrichtung, so ist die Anwendbarkeit der Formel durch die maximale Leistung begrenzt. Mit Erreichen der maximalen Leistung kann dann das Stellglied bzw. die Übertragungsfunktion derart angepasst werden, dass die Stellgröße der maximalen Leistung entspricht. Eine hierzu korrespondierende Logik kann aber auch in der Steuerstrecke zur Umwandlung der Stellgröße in die zu steuernde Größe hinterlegt werden, so dass die Leistung bei Stellgrößen oberhalb der maximalen Leistung auf die maximale Leistung begrenzt wird.

Gemäß einer besonderen Ausführungsform ist ergänzend ein kritischer oberer Primärsteuergrenzwert, der oberhalb des oberen Primärsteuergrößengrenzwerts liegt, in der Steuerung hinterlegt. Dann wird die Kühleinrichtung bis zur Überschreitung des kritischen oberen Primärsteuergrößengrenzwerts mit zur Primärgröße proportionaler Leistung und dann bei Überschreitung mit maximaler Leistung betrieben. Mit Überschreitung des kritischen oberen Primärsteuergrenzwerts wird somit das Stellglied zur Überführung der jeweiligen Steuergröße in die Stellgröße angepasst und die Primärsteuergröße geht nicht mehr in die Übertragungsfunktion ein.

Der Betrieb der Kühleinrichtung mit einer Leistung unterhalb der maximalen Leistung ermöglicht die Reduzierung des Energieverbrauchs als auch von Schallemissionen. Gleichzeitig können durch geringe Kühlung auch anderweitige nachteilige Effekte reduziert werden, wie beispielsweise die erhöhte Wasseraufnahme bei geringeren Temperaturen und die damit einhergehende Korrosionsgefahr. Die Ansteuerung ermöglicht somit einen an die Betriebsbedingungen angepassten Betrieb der Kühleinrichtung.

Ebenfalls alternativ oder ergänzend ist die Steuerungsvorrichtung dazu konfiguriert, die Kühleinrichtung derart anzusteuern, dass die Kühleinrichtung maximal bis zum Erreichen ihrer maximalen Leistung mit einer zur Sekundärsteuergröße proportionalen Leistung betrieben wird, wenn die Primärsteuergröße unterhalb des vorbestimmten oberen Primärsteuergrößengrenzwerts liegt oder gleich diesem ist und die Sekundärsteuergröße oberhalb des vorbestimmten Sekundärsteuergrößengrenzwerts liegt, oder wenn die Sekundärsteuergröße unterhalb des vorbestimmten Sekundärsteuergrößengrenzwerts liegt oder gleich diesem ist und die Primärsteuergröße oberhalb eines vorbestimmten unteren Primärsteuergrößengrenzwerts liegt oder gleich diesem ist.

Die Stellgröße kann sich somit aus der mit einem Proportionalfaktor multiplizierten Sekundärsteuergröße ergeben, also gemäß der Formel

$$\text{Stellgröße} = b * \text{Sekundärsteuergröße},$$

mit b als Sekundärsteuergrößenproportionalitätsfaktor. Auch hier ist bei der Leistung der Kühleinrichtung als Stellglied die maximale Leistung zu berücksichtigen. Wird bei einer Überschreitung des oberen Primärsteuergrenzwerts beispielsweise die Ansteuerung der Kühleinrichtung über die Primärsteuergröße ausgeführt, ist zu erwarten, dass die Steuerungsvorrichtung derart ausgelegt ist, dass die Stellgröße in Abhängigkeit der Sekundärsteuergröße eine Stellgröße in Abhängigkeit der Primärsteuergröße nicht überschreitet, so dass bei einer Ansteuerung in Abhängigkeit der Sekundärsteuergröße die maximale Leistung nicht gefordert wird. Eine entsprechende Auslegung der Steuerungsvorrichtung kann dann zu der Bedingung b * Maximalsekundärsteuergröße $\leq$ a * Mindestprimärsteuergröße korrespondieren. Es kann jedoch auch für die Ansteuerung in Abhängigkeit der Sekundärsteuergröße eine andere maximale Leistung vorgesehen werden, als für die Ansteuerung über die Primärsteuergröße. Hier wäre dann zwischen einer maximalen Sekundärsteuergrößenleistung und einer maximalen Primärsteuergrößenleistung zu unterscheiden, die jeweils auf die maximale Leistung anzuwenden wären.

Gemäß der vorstehenden Ansteuerung wird die Kühleinrichtung in jedem Fall maximal bis zum Erreichen ihrer maximalen Leistung mit einer zur Sekundärsteuergröße proportionalen Leistung betrieben, wenn die Primärsteuergröße unterhalb des vorbestimmten oberen Primärsteuergrößengrenzwerts liegt oder gleich diesem ist und die Sekundärsteuergröße zwischen dem vorbestimmten oberen Primärsteuergrößengrenzwert und einem vorbestimmten Sekundärsteuergrößengrenzwerts liegt. Wird der vorbestimmte Sekundärsteuergrößenwert erreicht oder unterschritten, ist für das Stellglied maßgeblich, welcher Wert der Primärsteuergröße vorliegt. Die Anpassung des Stellglieds zur Bereitstellung einer zur Sekundärsteuergröße proportionalen Leistung setzt hier voraus, dass die Primärsteuergröße oberhalb eines vorbestimmten unteren Primärsteuergrößengrenzwerts liegt oder gleich diesem ist. Die Anpassung des Stellglieds berücksichtigt somit die Primärsteuergröße als auch die Sekundärsteuergröße.

Auch hier ergeben sich die bereits angeführten Vorteile einer an die jeweiligen Betriebsbedingungen angepassten Ansteuerung der Kühleinrichtung.

Weiterhin alternativ oder ergänzend ist die Steuerungsvorrichtung dazu konfiguriert, die Kühleinrichtung derart anzusteuern, dass die Kühleinrichtung ausgeschaltet wird, wenn die Sekundärsteuergröße unterhalb des vorbestimmten Sekundärsteuergrößengrenzwerts liegt oder gleich diesem ist und die Primärsteuergröße unterhalb eines vorbestimmten unteren Primärsteuergrößengrenzwerts liegt.

Das Erreichen oder die Unterschreitung eines vorbestimmten Sekundärsteuergrößengrenzwerts und die Unterschreitung des unteren Primärsteuergrößengrenzwerts zeigt an, dass weder hinsichtlich der Sekundärsteuergröße noch hinsichtlich der Primärsteuergröße ein Erfordernis zum Betrieb der Kühleinrichtung besteht und diese somit abgeschaltet werden kann, um Energie sparen oder auch Schallemissionen reduzieren zu können.

In einer Ausgestaltung umfasst das Kompressorsystem zumindest eine Lufttemperaturdetektionseinheit, die eine Lufttemperatur detektiert, und zumindest eine Öltemperaturdetektionseinheit, die eine Öltemperatur detektiert, die mit der Steuerungsvorrichtung signaltechnisch verbunden sind, wobei die Steuerungsvorrichtung dazu konfiguriert ist, die detektierte Lufttemperatur als Primärsteuergröße und die detektierte Öltemperatur als Sekundärsteuergröße und/oder umgekehrt zu bestimmen.

Die Lufttemperatur und die Öltemperatur können über die Lufttemperaturdetektionseinheit und die Öltemperaturdetektionseinheit direkt oder indirekt detektiert werden. Eine indirekte Detektion kann beispielsweise über eine Detektion einer zur Luft- oder Öltemperatur korrespondierenden jeweiligen Bauteiltemperatur erfolgen.

Die Bestimmung der Lufttemperatur als Primärsteuergröße ermöglicht es, die Lufttemperatur als kritische Größe als Primärkriterium zu betrachten. Die Öltemperatur geht als Sekundärsteuergröße ein, da eine zu hohe Öltemperatur eine Alterung des Öls und eine zu niedrige Öltemperatur eine erhöhte Wasseraufnahme bedingen kann. Sofern hinsichtlich der Lufttemperatur als Primärsteuergröße kein Ansteuerungserfordernis vorliegt, kann somit der Temperaturbereich für die Öltemperatur als Sekundärsteuergröße optimiert werden.

Insgesamt ergibt sich somit eine den jeweiligen Betriebszuständen angepasste Ansteuerung der Kühleinrichtung für einen optimalen Temperaturbereich. Hierdurch kann die Korrosionsgefahr und der Bauteilverschleiß des Kompressorsystems verringert werden. Kurze Einschaltzeiten des Kompressors sind gleichzeitig weniger problematisch.

Alternativ kann aber auch die Öltemperatur als Primärsteuergröße und die Lufttemperatur als Sekundärsteuergröße bestimmt werden. Dies kann von Vorteil sein, wenn beispielsweise die Aufnahme von Wasser durch das Öl oder die Alterung des Öls als maßgebliche kritische Größe vorzusehen ist. Entsprechend kann die Zuordnung der Öltemperatur als Primärsteuergröße und der Lufttemperatur als Sekundärsteuergröße und umgekehrt auch anpassbar sein, beispielsweise in Abhängigkeit vorbestimmter Betriebszustände oder anderweitiger Vorgaben oder Eingabemöglichkeiten.

Die Detektion der Sekundärsteuergröße oder die Auswertung der Sekundärsteuergröße muss nicht gleichzeitig mit der Detektion oder der Auswertung der Primärsteuergröße erfolgen. Beispielsweise kann die Detektion oder Auswertung der Steuergröße erst dann vorgesehen werden, wenn die Primärsteuergröße nicht oberhalb eines oberen Primärsteuergrößenwerts liegt.

Insbesondere sind die Lufttemperaturdetektionseinheit und die Öltemperaturdetektionseinheit an einem jeweiligen Ausgang des Kompressors angeordnet.

Die Lufttemperaturdetektionseinheit befindet sich demnach in einem Bereich des Austritts der Luft aus dem Kompressor. Die Öltemperatureinheit misst die Öltemperatur des Öls im Bereich des Ölsumpfs und befindet sich z.B. in einem Bereich des Austritts des Öls aus dem Ölsumpf. Die Detektion erfolgt somit jeweils an den Orten der zu erwartenden Maximaltemperaturen der Luft bzw. des Öls. Alternativ oder ergänzend kann die Lufttemperaturdetektionseinheit auch eine Temperatur der Luft, die aus einem dem Kompressor nachgeschalteten Nachkühler austritt, detektieren. Ebenso kann die Öltemperaturdetektionseinheit eine Öltemperatur nach Durchlaufen eines nachgeschalteten inneren und/oder äußeren Ölkreislaufs detektieren.

In einer Ausführung ist das Kompressorsystem als ölgeschmierter Kompressor, insbesondere als ölgeschmierter Schraubenkompressor, ausgebildet.

Gerade ölgeschmierte Kompressoren müssen eine große Bandbreite an klimatischen Bedingungen abdecken, beispielsweise einen Einsatzbereich von -40°C bis +50°C, und der Kühlbedarf während des Betriebs kann sehr unterschiedlich sein. Zum Beispiel ist die Auslastung hier auch ein wichtiger Faktor. Als zu kühlende Medien sind die Prozessluft und das Öl zu berücksichtigen, wobei jedoch Optimierungskonflikte auftreten können. Einerseits soll das Öl möglichst schnell auf Betriebstemperatur kommen soll, aber gleichzeitig darf die Lufttemperatur am Kühleraustritt nicht zu weit ansteigen. Eine variable Kühlung hilft hier insbesondere, einen möglichst optimalen Betrieb zu gewährleisten.

In einem weiteren Aspekt betrifft die Erfindung ein Verfahren zur Steuerung einer Kühleinrichtung eines vorstehend beschriebenen Kompressorsystems, aufweisend die Schritte:

- Detektieren zumindest zweier Steuergrößen und

- Steuern der Kühleinrichtung (40) auf Basis der detektierten Steuergrößen,

wobei die Steuergröße für das Stellglied und/oder das Stellglied für die Ansteuerung der Kühleinrichtung in Abhängigkeit der detektierten Steuergrößen dynamisch angepasst wird.

Dabei bestimmt die Steuerungsvorrichtung die eine detektierte Steuergröße als Primärsteuergröße und die andere detektierte Steuergröße als Sekundärsteuergröße und steuert die Kühleinrichtung in Abhängigkeit der Primärsteuergröße an, wenn die Primärsteuergröße oberhalb eines vorbestimmten oberen Primärsteuergrößengrenzwerts liegt, und steuert die Kühleinrichtung in Abhängigkeit der Sekundärsteuergröße an, wenn die Primärsteuergröße unterhalb eines vorbestimmten oberen Primärsteuergrößengrenzwerts liegt oder gleich diesem ist und die Sekundärsteuergröße oberhalb eines vorbestimmten Sekundärsteuergrößengrenzwerts liegt, und/oder steuert die Kühleinrichtung in Abhängigkeit der Primärsteuergröße und der Sekundärsteuergröße an, wenn die Primärsteuergröße unterhalb des vorbestimmten oberen Primärsteuergrößengrenzwerts liegt oder gleich diesem ist und die Sekundärsteuergröße unterhalb des vorbestimmten Sekundärsteuergrößengrenzwerts liegt.

Die Merkmale und Vorteile des Verfahrens ergeben sich analog zu den Ausführungen zum Kompressorsystem. Entsprechend wird auf die korrespondierenden Angaben zum Kompressorsystem verwiesen.

Insbesondere steuert die Steuerungsvorrichtung die Kühleinrichtung wie folgt an:

a) die Kühleinrichtung wird mit maximaler Leistung betrieben, wenn die Primärsteuergröße oberhalb eines kritischen oberen Primärsteuergrößengrenzwerts liegt, der insbesondere oberhalb des vorbestimmten oberen Primärsteuergrößengrenzwerts liegt,

b) die Kühleinrichtung wird maximal bis zum Erreichen ihrer maximalen Leistung mit einer zur Primärsteuergröße proportionalen Leistung betrieben, wenn die Primärsteuergröße oberhalb des vorbestimmten oberen Primärsteuergrößengrenzwerts liegt,

c) die Kühleinrichtung wird maximal bis zum Erreichen ihrer maximalen Leistung mit einer zur Sekundärsteuergröße proportionalen Leistung betrieben,

wenn die Primärsteuergröße unterhalb des vorbestimmten oberen Primärsteuergrößengrenzwerts liegt oder gleich diesem ist und die Sekundärsteuergröße oberhalb des vorbestimmten Sekundärsteuergrößengrenzwerts liegt, oder

wenn die Sekundärsteuergröße unterhalb des vorbestimmten Sekundärsteuergrößengrenzwerts liegt oder gleich diesem ist und die Primärsteuergröße oberhalb eines vorbestimmten unteren Primärsteuergrößengrenzwerts liegt oder gleich diesem ist, und/oder

d) die Kühleinrichtung wird ausgeschaltet, wenn die Sekundärsteuergröße unterhalb des vorbestimmten Sekundärsteuergrößengrenzwerts liegt oder gleich diesem ist und die Primärsteuergröße unterhalb eines vorbestimmten unteren Primärsteuergrößengrenzwerts liegt.

Die diesbezüglichen Erläuterungen zum Kompressorsystem finden gleichfalls Anwendung auf die vorstehende Verfahrensausgestaltung.

Des Weiteren betrifft die Erfindung ein Computerprogrammprodukt mit einem auf einem maschinenlesbaren Träger gespeicherten Programmcode, der dazu ausgebildet ist, wenn er auf einer Datenverarbeitungsvorrichtung ausgeführt wird, die Datenverarbeitungsvorrichtung dazu veranlasst, das vorstehend beschriebene Verfahren auszuführen.

Über das Computerprogrammprodukt ist es unter anderem auf einfache Weise möglich, signaltechnisch angesteuerte Kühleinrichtungen herkömmlicher Kompressorsysteme nachzurüsten.

Im Folgenden wird die Erfindung anhand einer Ausführungsform unter Hinzuziehung der beigefügten Figuren näher erläutert. Die Figuren zeigen im Einzelnen:

**Figur** 1 zeigt eine schematische Darstellung eines Kompressorsystems gemäß einer ersten Ausführungsform der Erfindung.

**Figur** 2 zeigt eine schematische Konzeptskizze zur Ansteuerung einer Kühleinrichtung, die auf ein Kompressorsystem gemäß **Figur** 1 angewendet werden kann.

**Figur** 3 zeigt ein Flussdiagramm zur Ansteuerung einer Kühleinrichtung, das auf ein Kompressorsystem gemäß **Figur** 1 angewendet werden kann.

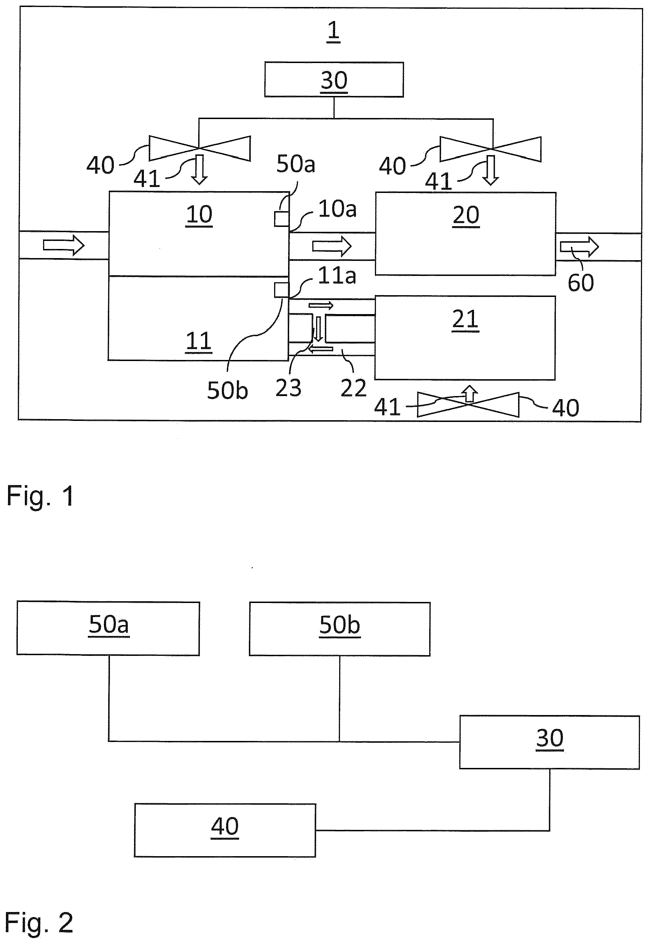

**Figur** 1 zeigt eine schematische Darstellung eines Kompressorsystems 1, das hier exemplarisch als ölgeschmiertes Schraubenkompressorsystem ausgebildet ist, und einen Kompressor 10, hier einen Schraubenkompressor, und einen Nachkühler 20 umfasst. Die zu verdichtende Luft wird gemäß den Pfeilen, die den Prozessluftstrom 60 nachbilden, zunächst durch den Kompressor 10 geführt, dort verdichtet und durchläuft anschließend den Nachkühler 20. Zudem umfasst das Kompressorsystem 1 eine Steuerungsvorrichtung 30, die die Kühleinrichtung, die in der vorliegenden Ausführungsform die Lüfter 40 umfasst, ansteuert. Die Lüfter können im Betrieb jeweils einen Kühlluftvolumenstrom 41 erzeugen, der über einen Lüfter 40 primär auf den Kompressor 10 und/oder auf den Kompressorauslass, über einen Lüfter 40 primär auf den Nachkühlerauslass und/oder den Nachkühler 20 und über einen Lüfter 40 primär auf einen später noch beschriebenen Ölkühler 21 und/oder dessen Auslass gerichtet ist. Die Steuerungsvorrichtung 30 ist hier derart ausgebildet, dass sie sowohl die Einund Ausschaltzeitpunkte der Lüfter 40 als auch die Kühlluftvolumenstromrate der Lüfter 40 durch Ansteuerung der Lüfterdrehzahl, die zur Lüfterleistung korrespondiert, anpassen kann. Die Lüfterleistung wird jeweils gleich angesteuert. Alternativ kann es auch vorgesehen sein, die Stellgrößen der jeweiligen Lüfter 40 unterschiedlich vorzusehen, also beispielsweise die Übertragungsfunktionen und/oder ggf. verwendete Proportionalfaktoren unterschiedlich auszuwählen. In einer anderen Ausgestaltung kann auch nur ein Lüfter 40 als Kühleinrichtung vorgesehen sein.

Der Kompressor 10 umfasst zudem einen Ölsumpf 11, wobei das Öl einen inneren Ölkreislauf 23 und einen äußeren Ölkreislaufs 22, der durch den Ölkühler 21 geführt wird, durchlaufen kann. Die Führung des Öls über den äußeren Ölkreislauf 22 kann an den Betrieb der Kühleinrichtung bzw. des Lüfters 40 gekoppelt sein. Beispielsweise wird das Öl nur dann über den äußeren Ölkreislauf geführt, wenn eine Primärsteuergröße oberhalb eines vorbestimmten oberen Primärsteuergrößengrenzwerts oder eine Sekundärsteuergröße oberhalb eines vorbestimmten Sekundärsteuergrößengrenzwerts liegt, wie dies später noch ausgeführt wird.

Am Ausgang der Prozessluft 60 aus dem Kompressor 10 ist eine Lufttemperaturdetektionseinheit 50a angeordnet, die die Lufttemperatur $T_{Luft}$ am Ausgang 10a aus dem Kompressor 10 detektiert. Alternativ kann die Lufttemperaturdetektionseinheit beispielsweise auch am Ausgang des Nachkühlers 20 vorgesehen werden. Darüber hinaus ist am Ausgang 11a des Ölsumpfs 11 eine Öltemperaturdetektionseinheit 50b angeordnet, die die Öltemperatur $T_{Öl}$ am Ausgang des Ölsumpfs 11 detektiert. Alternativ kann die Öltemperaturdetektionseinheit beispielsweise auch am Ausgang des Ölkühlers 21 vorgesehen werden.

In der vorliegenden Ausführungsform bestimmt die Steuerungsvorrichtung 30 die Lufttemperatur $T_{Luft}$ als Primärsteuergröße und die Öltemperatur $T_{Öl}$ als Sekundärsteuergröße, um die Lüfter 40 gemäß der detektierten Lufttemperatur $T_{Luft}$ und/oder Öltemperatur $T_{Öl}$ anzusteuern.

**Figur** 2 zeigt hierzu eine schematische Konzeptskizze der Ansteuerung der Lüfter 40. In der dargestellten Ausführungsform werden der Steuerungsvorrichtung 30 die jeweils aktuell über die Lufttemperaturdetektionseinheit 50a und die Öltemperaturdetektionseinheit 50b detektierten Werte der Lufttemperatur $T_{Luft}$ als Primärsteuergröße und der Öltemperatur $T_{Öl}$ als Sekundärsteuergröße übermittelt. Die Übermittlung kann kabelgeführt wie auch kabellos erfolgen. Auch wenn hier die gleichzeitige Weiterleitung beider Signale erfolgt, kann beispielsweise die Sekundärsteuergröße auch nur bedarfsweise detektiert und/oder übermittelt werden. In einer Variante wird die Sekundärsteuergröße zum Beispiel nur dann detektiert und übermittelt, wenn die Primärsteuergröße unterhalb eines vorbestimmten oberen Primärsteuergrenzwerts liegt oder gleich diesem ist.

Die Steuerungsvorrichtung 30 wählt dann in Abhängigkeit der Werte der Primärsteuergröße und/oder Sekundärsteuergröße die heranzuziehende Steuergröße oder die heranzuziehende Steuergrößen und/oder die anwendbare Übertragungsfunktion aus. Entsprechend werden die Steuergröße und/oder das Stellglied für die Ansteuerung der Lüfter 40 dynamisch angepasst.

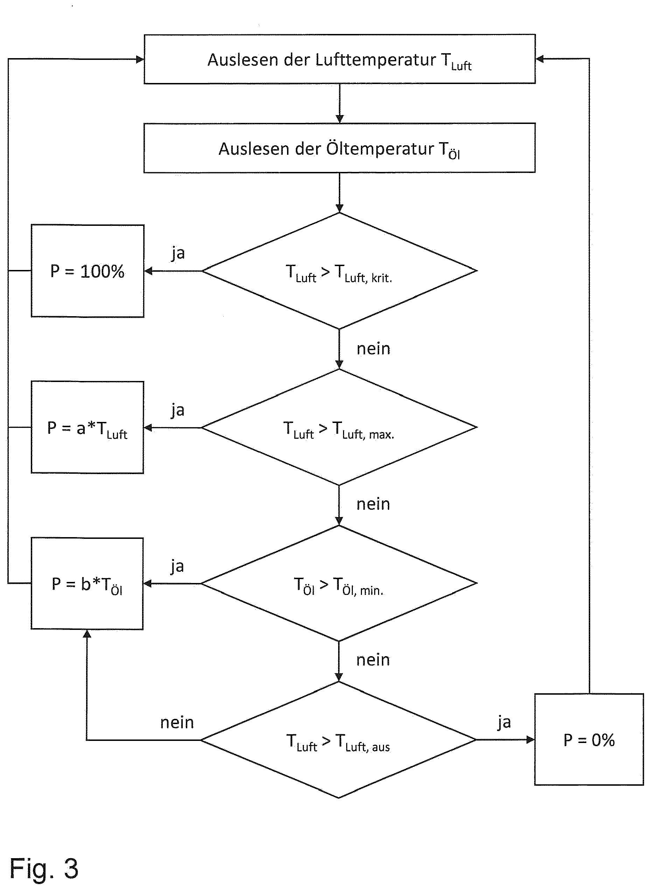

Die Ansteuerung mit dynamischer Anpassung der Steuergröße und/oder des Stellglieds für die Ansteuerung der Lüfter 40 wird exemplarisch anhand des in **Figur 3** gezeigten Flussdiagramms erläutert. Hierzu werden die Lufttemperatur $T_{Luft}$ als Primärsteuergröße und die Öltemperatur $T_{Öl}$ als Sekundärsteuergröße ausgelesen. Als Entscheidungskriterien für die Auswahl der für die Ansteuerung konkret anzuwendenden Steuergröße und Übertragungsfunktion des Stellglieds sind in der Steuerung ein kritischer oberer Lufttemperaturgrenzwert $T_{Luft, krit.}$ als kritischer oberer Primärsteuergrößengrenzwert, ein oberer Lufttemperaturgrenzwert $T_{Luft, max.}$ als oberer Primärsteuergrößengrenzwert, ein Öltemperaturgrenzwert $T_{Öl, min.}$ als Sekundärsteuergrößengrenzwert und ein unterer Lufttemperaturgrenzwert $T_{Luft, aus}$ als unterer Primärsteuergrößengrenzwert hinterlegt. Der kritische obere Lufttemperaturgrenzwert $T_{Luft, krit.}$ entspricht hier einer Lufttemperatur, die ein Risiko für das Kompressorsystem darstellen kann, so dass hier eine maximale Kühlung erforderlich wird. Demnach liegt der kritische obere Lufttemperaturgrenzwert $T_{Luft, krit.}$ oberhalb des oberen Lufttemperaturgrenzwerts $T_{Luft, max.}$, der eine Kühlung bedingt, die aber nicht mit maximaler Leistung erfolgen muss. Der Öltemperaturgrenzwert $T_{Öl, min.}$ entspricht der Mindesttemperatur des Öls und der untere Lufttemperaturgrenzwert $T_{Luft, aus}$ der maximalen Lufttemperatur, bis zu der die Lüfter 40 ausgeschaltet sein dürfen.

Liegt die detektierte Lufttemperatur $T_{Luft}$ oberhalb des kritischen oberen Luftemperaturgrenzwerts $T_{Luft, krit.}$ werden die Lüfter 40 jeweils mit maximaler Leistung betrieben. Die Leistung P als Stellgröße ergibt sich dabei aus P = 100%, wobei sich hier die 100% auf die technisch angegebene Maximalleistung bezieht. Die 100% können sich jedoch auch auf einen anderen vorbestimmten Maximalwert, der nicht durch den Lüfter 40 selbst vorgegeben ist, beziehen. Die Leistung P der Lüfter 40 bezieht sich in diesem Ausführungsbeispiel auf die Lüfterdrehzahl und damit auf die über die Lüfter 40 bereitgestellte Kühlluftvolumenstromrate.

Wird der kritische obere Lufttemperaturgrenzwert $T_{Luft, krit.}$ nicht überschritten, wird abgefragt, ob die Lufttemperatur $T_{Luft}$ oberhalb des oberen Lufttemperaturgrenzwerts $T_{Luft, max.}$ liegt. Ist dies der Fall, werden die Lüfter 40 jeweils mit einer zur Lufttemperatur $T_{Luft}$ proportionalen Leistung betrieben. Die Stellgröße P ergibt sich somit analog zu einer zu $P = a * T_{Luft}$ korrespondierenden Übertragungsfunktion. Sofern die Lüfter 40 unterschiedlich angesteuert werden sollten, kann der Proportionalitätsfaktor a je Lüfter bedarfsweise unterschiedlich ausgewählt werden. Zudem kann die Übertragungsfunktion auch einen zusätzlichen Summanden oder Subtrahenden aufweisen, wie $P = a * T_{Luft}$ + Offset, um beispielsweise eine Sockelleistung oder eine Leistungsminderung vorsehen zu können.

Überschreitet die Lufttemperatur $T_{Luft}$ nicht den oberen Lufttemperaturgrenzwert $T_{Luft, max.}$, wird die Öltemperatur $T_{Öl}$ zur Ansteuerung der Lüfter 40 herangezogen. Liegt die Öltemperatur $T_{Öl}$ oberhalb des Öltemperaturgrenzwerts $T_{Öl, min.}$, werden die Lüfter 40 jeweils mit einer zur Öltemperatur $T_{Öl}$ proportionalen Leistung betrieben. Die Stellgröße P ergibt sich somit analog zu einer zu $P = b * T_{Öl}$ korrespondierenden Übertragungsfunktion. Auch hier können die Lüfter 40 durch Wahl des Proportionalitätsfaktors b mit unterschiedlicher Leistung ansteuerbar sein und/oder die Übertragungsfunktion einen zusätzlichen Summanden oder Subtrahenden aufweisen.

Sofern die Öltemperatur $T_{Öl}$ nicht oberhalb des Öltemperaturgrenzwerts $T_{Öl, min.}$ liegt, wird zusätzlich wieder die zuvor detektierte Lufttemperatur $T_{Luft}$ in die Auswertung durch die Steuerungsvorrichtung 30 einbezogen. Liegt in einem solchen Fall die Lufttemperatur $T_{Luft}$ oberhalb des unteren Lufttemperaturgrenzwerts $T_{Luft, aus}$ oder ist gleich diesem Wert, so werden die Lüfter 40 gemäß der Ansteuerung, wenn die Öltemperatur oberhalb des Öltemperaturgrenzwerts $T_{Öl, min.}$ liegt, angesteuert. Liegt in einem solchen Fall die Lufttemperatur $T_{Luft}$ jedoch unterhalb des unteren Lufttemperaturgrenzwerts $T_{Luft, aus}$, so werden die Lüfter 40 ausgeschaltet.

Auch wenn das Flussdiagramm eine serielle Abfrage zeigt, kann die Auswertung auch parallel vorgenommen werden, indem die detektierten Primär- und Sekundärsteuergrößen einer durch die jeweiligen Abfragen zuordenbaren Kategorie zugeteilt werden, beispielsweise durch Temperaturmessung und Abgleich mit Tabellenwerten. Im Ansteuerungsergebnis ist die parallele Auswertung zur seriellen Auswertung äquivalent. Die serielle Abfrage ermöglicht jedoch, dass beispielsweise die Sekundärsteuergröße nur bedarfsabhängig ausgelesen werden muss.

Die Erfindung ist zudem nicht auf die beschriebenen Ausführungsformen beschränkt. Auch wenn die Kühleinrichtung anhand der Verwendung von Lüftern beschrieben wurde, können auch anderweitige Kühleinrichtungen, wie Wärmetauscher, an denen die Luft im Kompressorsystem vorbei- und/oder hindurchgeführt wird, verwendet werden.

Die Kühlleistung der Wärmetauscher kann durch deren Positionierung, Orientierung und/oder bei den Wärmetauscher durchströmenden Wärmeträgern durch die Kühlfluidvolumenstromrate, die Kühlfluidvolumenstromtemperatur und/oder einen Wechsel des Wärmeträgers angepasst werden.

BEZUGSZEICHENLISTE

| | |
|---|---|
| 1 | Kompressorsystem |
| 10 | Kompressor |
| 10a | Ausgang (Luft) |
| 11 | Ölsumpf |
| 11a | Ausgang (Öl) |
| 20 | Nachkühler |
| 21 | Ölkühler |
| 22 | äußerer Ölkreislauf |
| 23 | innerer Ölkreislauf |
| 24 | Zwischenkühler |
| 30 | Steuerungsvorrichtung |
| 40 | Lüfter |
| 41 | Kühlluftvolumenstrom |
| 50a | Lufttemperaturdetektionseinheit |
| 50b | Öltemperaturdetektionseinheit |
| 60 | Prozessluftstrom |
| $T_{Luft}$ | Lufttemperatur |
| $T_{Luft, aus}$ | unterer Lufttemperaturgrenzwert |
| $T_{Luft, krit.}$ | kritischer oberer Lufttemperaturgrenzwert |
| $T_{Luft, max.}$ | oberer Lufttemperaturgrenzwert |
| $T_{Öl}$ | Öltemperatur |
| $T_{Öl, min.}$ | Öltemperaturgrenzwert |

**Patentansprüche**

1. Kompressorsystem (1), aufweisend:

   einen Kompressor (10),
   eine Kühleinrichtung (40) und
   eine Steuerungsvorrichtung (30)
   wobei die Steuerungsvorrichtung (30) dazu konfiguriert ist, die Kühleinrichtung (40) unabhängig vom Betrieb des Kompressors (10) anzusteuern und eine Steuergröße ($T_{Luft}$, $T_{Öl}$) eines Stellglieds und/oder das Stellglied für die Ansteuerung der Kühleinrichtung (40) dynamisch anpassen zu können,
   wobei die Steuerungsvorrichtung (30) konfiguriert ist, zumindest zwei Steuergrößen ($T_{Luft}$, $T_{Öl}$) zu empfangen, wobei eine Steuergröße als Primärsteuergröße ($T_{Luft}$) und die andere Steuergröße als Sekundärsteuergröße ($T_{Öl}$) festlegbar ist, um die Kühleinrichtung (40) in Abhängigkeit der Primärsteuergröße ($T_{Luft}$) und/oder Sekundärsteuergröße ($T_{Öl}$) anzusteuern, und

wobei die Steuerungsvorrichtung (30) dazu konfiguriert ist, die Kühleinrichtung (40) in Abhängigkeit der Primärsteuergröße ($T_{Luft}$) anzusteuern, wenn die Primärsteuergröße ($T_{Luft}$) oberhalb eines vorbestimmten oberen Primärsteuergrößengrenzwerts ($T_{Luft, max.}$) liegt, oder die Kühleinrichtung (40) in Abhängigkeit der Sekundärsteuergröße ($T_{Öl}$) anzusteuern, wenn die Primärsteuergröße ($T_{Luft}$) unterhalb eines vorbestimmten oberen Primärsteuergrößengrenzwerts ($T_{Luft, max.}$) liegt oder gleich diesem ist und die Sekundärsteuergröße ($T_{Öl}$) oberhalb eines vorbestimmten Sekundärsteuergrößengrenzwerts ($T_{Öl, min.}$) liegt, oder die Kühleinrichtung (40) in Abhängigkeit der Primärsteuergröße ($T_{Luft}$) und der Sekundärsteuergröße ($T_{Öl}$) anzusteuern, wenn die Primärsteuergröße ($T_{Luft}$) unterhalb des vorbestimmten oberen Primärsteuergrößengrenzwerts ($T_{Luft, max.}$) liegt oder gleich diesem ist und die Sekundärsteuergröße ($T_{Öl}$) unterhalb des vorbestimmten Sekundärsteuergrößengrenzwerts ($T_{Öl, min.}$) liegt.

2. Kompressorsystem (1) nach Anspruch 1, wobei die Steuerungsvorrichtung (30) konfiguriert ist, eine Kühlfluidvolumenstromrate, insbesondere eine Kühlluftvolumenstromrate, als Stellgröße (P) vorzugeben.

3. Kompressorsystem (1) nach Anspruch 1 oder 2, wobei die Steuerungsvorrichtung (30) dazu konfiguriert ist, die Kühleinrichtung (40) derart anzusteuern, dass die Kühleinrichtung (40) mit maximaler Leistung betrieben wird, wenn die Primärsteuergröße ($T_{Luft}$) oberhalb eines kritischen oberen Primärsteuergrößengrenzwerts ($T_{Luft, krit.}$) liegt, der insbesondere oberhalb des vorbestimmten oberen Primärsteuergrößengrenzwerts ($T_{Luft, max.}$) liegt.

4. Kompressorsystem (1) nach einem der vorherigen Ansprüche, wobei die Steuerungsvorrichtung (30) dazu konfiguriert ist, die Kühleinrichtung (40) derart anzusteuern, dass die Kühleinrichtung (40) maximal bis zum Erreichen ihrer maximalen Leistung mit einer zur Primärsteuergröße ($T_{Luft}$) proportionalen Leistung betrieben wird, wenn die Primärsteuergröße ($T_{Luft}$) oberhalb des vorbestimmten oberen Primärsteuergrößengrenzwerts ($T_{Luft, max.}$) liegt.

5. Kompressorsystem (1) nach einem der vorherigen Ansprüche, wobei die Steuerungsvorrichtung (30) dazu konfiguriert ist, die Kühleinrichtung (40) derart anzusteuern, dass die Kühleinrichtung (40) maximal bis zum Erreichen ihrer maximalen Leistung mit einer zur Sekundärsteuergröße ($T_{Öl}$) proportionalen Leistung betrieben wird, wenn die Primärsteuergröße ($T_{Luft}$) unterhalb des vorbestimmten oberen Primärsteuergrößengrenzwerts ($T_{Luft, max.}$) liegt oder gleich diesem ist und die Sekundärsteuergröße ($T_{Öl}$) oberhalb des vorbestimmten Sekundärsteuergrößengrenzwerts ($T_{Öl, min.}$) liegt, oder wenn die Sekundärsteuergröße ($T_{Öl}$) unterhalb des vorbestimmten Sekundärsteuergrößengrenzwerts ($T_{Öl, min.}$) liegt oder gleich diesem ist und die Primärsteuergröße ($T_{Luft}$) oberhalb eines vorbestimmten unteren Primärsteuergrößengrenzwerts ($T_{Luft, aus}$) liegt oder gleich diesem ist.

6. Kompressorsystem (1) nach einem der vorherigen Ansprüche, wobei die Steuerungsvorrichtung (30) dazu konfiguriert ist, die Kühleinrichtung (40) derart anzusteuern, dass die Kühleinrichtung (40) ausgeschaltet wird, wenn die Sekundärsteuergröße ($T_{Öl}$) unterhalb des vorbestimmten Sekundärsteuergrößengrenzwerts ($T_{Öl, min.}$) liegt oder gleich diesem ist und die Primärsteuergröße ($T_{Luft}$) unterhalb eines vorbestimmten unteren Primärsteuergrößengrenzwerts ($T_{Luft, aus}$) liegt.

7. Kompressorsystem (1) nach einem der vorherigen Ansprüche, wobei das Kompressorsystem (1) zumindest eine Lufttemperaturdetektionseinheit (50a), die eine Lufttemperatur detektiert, und zumindest eine Öltemperaturdetektionseinheit (50b), die eine Öltemperatur detektiert, umfasst, die mit der Steuerungsvorrichtung (30) signaltechnisch verbunden sind, und wobei die Steuerungsvorrichtung (30) dazu konfiguriert ist, die detektierte Lufttemperatur ($T_{Luft}$) als Primärsteuergröße ($T_{Luft}$) und die detektierte Öltemperatur ($T_{Öl}$) als Sekundärsteuergröße ($T_{Öl}$) und/oder umgekehrt zu bestimmen.

8. Kompressorsystem (1) nach Anspruch 7, wobei die Lufttemperaturdetektionseinheit (50a) und die Öltemperaturdetektionseinheit (50b) an einem jeweiligen Ausgang (10a, 11a) des Kompressors (10) angeordnet sind.

9. Kompressorsystem (1) nach einem der vorherigen Ansprüche, wobei das Kompressorsystem (1) als ölgeschmierter Kompressor, insbesondere ölgeschmierter Schraubenkompressor, ausgebildet ist.

10. Verfahren zur Steuerung einer Kühleinrichtung (40) eines Kompressorsystems (1) gemäß einem der Ansprüche 1 bis 9, aufweisend die Schritte:

   - Detektieren zumindest zweier Steuergrößen ($T_{Luft}$, $T_{Öl}$) und
   - Steuern der Kühleinrichtung (40) auf Basis der detektierten Steuergrößen ($T_{Luft}$, $T_{Öl}$), wobei die Steuergröße ($T_{Luft}$, $T_{Öl}$) für das Stellglied und/oder das Stellglied für die Ansteuerung der Kühleinrichtung (40) in Abhängigkeit der detektierten Steuergrößen ($T_{Luft}$, $T_{Öl}$) dynamisch angepasst wird, wobei die Steuerungsvorrichtung die eine detektierte Steuergröße als Primärsteuergröße ($T_{Luft}$) und die andere detektierte Steuergröße als Sekundärsteuergröße ($T_{Öl}$) bestimmt und die Kühleinrichtung (40) in Abhängigkeit der Primärsteuergröße ($T_{Luft}$) ansteuert, wenn die Primärsteuergröße ($T_{Luft}$) oberhalb eines vorbestimmten oberen Primärsteuergrößengrenzwerts ($T_{Luft, max.}$) liegt, oder die Kühleinrichtung (40) in Abhängigkeit der Sekundärsteuergröße ($T_{Öl}$) ansteuert wenn die Primärsteuergröße ($T_{Luft}$) unterhalb eines vorbestimmten oberen Primärsteuergrößengrenzwerts ($T_{Luft, max.}$) liegt oder gleich diesem ist und die Sekundärsteuergröße ($T_{Öl}$) oberhalb eines vorbestimmten Sekundärsteuergrößengrenzwerts ($T_{Öl, min.}$) liegt, oder die Kühleinrichtung (40) in Abhängigkeit der Primärsteuergröße ($T_{Luft}$) und der Sekundärsteuergröße ($T_{Öl}$) ansteuert, wenn die Primärsteuergröße ($T_{Luft}$) unterhalb des vorbestimmten oberen Primärsteuergrößengrenzwerts ($T_{Luft, max.}$) liegt oder gleich diesem ist und die Sekundärsteuergröße ($T_{Öl}$) unterhalb des vorbestimmten Sekundärsteuergrößengrenzwerts ($T_{Öl, min.}$) liegt.

11. Verfahren nach Anspruch 10, wobei die Steuerungsvorrichtung (30) die Kühleinrichtung (40) wie folgt ansteuert:

a) die Kühleinrichtung (40) wird mit maximaler Leistung (P) betrieben, wenn die Primärsteuergröße ($T_{Luft}$) oberhalb eines kritischen oberen Primärsteuergrößengrenzwerts ($T_{Luft, krit.}$) liegt, der insbesondere oberhalb des vorbestimmten oberen Primärsteuergrößengrenzwerts ($T_{Luft, max.}$) liegt,
b) die Kühleinrichtung (40) wird maximal bis zum Erreichen ihrer maximalen Leistung mit einer zur Primärsteuergröße ($T_{Luft}$) proportionalen Leistung (P) betrieben, wenn die Primärsteuergröße ($T_{Luft}$) oberhalb des vorbestimmten oberen Primärsteuergrößengrenzwerts ($T_{Luft, max.}$) liegt,
c) die Kühleinrichtung (40) wird maximal bis zum Erreichen ihrer maximalen Leistung mit einer zur Sekundärsteuergröße ($T_{Öl}$) proportionalen Leistung (P) betrieben,

wenn die Primärsteuergröße ($T_{Luft}$) unterhalb des vorbestimmten oberen Primärsteuergrößengrenzwerts ($T_{Luft, max.}$) liegt oder gleich diesem ist und die Sekundärsteuergröße ($T_{Öl}$) oberhalb des vorbestimmten Sekundärsteuergrößengrenzwerts ($T_{Öl, min.}$) liegt oder
wenn die Sekundärsteuergröße ($T_{Öl}$) unterhalb des vorbestimmten Sekundärsteuergrößengrenzwerts ($T_{Öl, min.}$) liegt oder gleich diesem ist und die Primärsteuergröße ($T_{Luft}$) oberhalb eines vorbestimmten unteren Primärsteuergrößengrenzwerts ($T_{Luft, aus}$) liegt oder gleich diesem ist, und/oder

d) die Kühleinrichtung (40) wird ausgeschaltet, wenn die Sekundärsteuergröße ($T_{Öl}$) unterhalb des vorbestimmten Sekundärsteuergrößengrenzwerts ($T_{Öl, min.}$) liegt oder gleich diesem ist und die Primärsteuergröße ($T_{Luft}$) unterhalb eines vorbestimmten unteren Primärsteuergrößengrenzwerts ($T_{Luft, aus}$) liegt.

12. Computerprogrammprodukt mit einem auf einem maschinenlesbaren Träger gespeicherten Programmcode, der dazu ausgebildet ist, wenn er auf einer Datenverarbeitungsvorrichtung ausgeführt wird, die Datenverarbeitungsvorrichtung dazu veranlasst, das Verfahren nach Anspruch 10 oder 11 auszuführen.

**Claims**

1. Compressor system (1) having

a cooling device (40) and
a control device (30),
wherein the control device (30) is configured to activate the cooling device (40) independently of the operation of the compressor (10) and to be able to adapt a control variable ($T_{Luft}$, $T_{Öl}$) of an actuator and/or the actuator dynamically for the activation of the cooling device (40),
wherein the control device (30) is configured to receive at least two control variables ($T_{Luft}$, $T_{Öl}$), wherein one control variable can be defined as primary control variable ($T_{Luft}$) and the other control variable can be defined as secondary control variable (Toi) in order to activate the cooling device (40) in dependence on the primary control variable ($T_{Luft}$) and/or the secondary control variable ($T_{Öl}$), and
wherein the control device (30) is configured to activate the cooling device (40) in dependence on the primary control variable ($T_{Luft}$) if the primary control variable ($T_{Luft}$) is above a predetermined upper primary control variable limit value ($T_{Luft, max}$) or to activate the cooling device (40) in dependence on the secondary control variable (Toi) if the primary control variable ($T_{Luft}$) is below or equal to a predetermined upper primary control variable limit value ($T_{Luft,max}$) and the secondary control variable (Toi) is above a predetermined secondary control variable limit value ($T_{Öl, min}$) or to activate the cooling device (40) in dependence on the primary control variable ($T_{Luft}$) and the secondary control variable (Toi) if the primary control variable ($T_{Luft}$) is below or equal to the predetermined upper primary control variable limit value ($T_{Luft,max}$) and the secondary control variable (Toi) is below the predetermined secondary control variable limit value (Toi, $_{min}$).

2. Compressor system (1) according to claim 1, wherein the control device (30) is configured to predetermine a cooling fluid volumetric flow rate, in particular a cooling air volumetric flow rate, as control variable (P).

3. Compressor system (1) according to claim 1 or 2, wherein the control device (30) is configured to activate the cooling device (40) in such a way that the cooling device (40) is operated at maximum power if the primary control variable ($T_{Luft}$) is above a critical upper primary control variable limit value ($T_{Luft, krit}$), which is in particular above the predetermined upper primary control variable limit value ($T_{Luft,max}$).

4. Compressor system (1) according to any of the preceding claims, wherein the control device (30) is configured to activate the cooling device (40) in such a way that the cooling device (40) is operated at a power proportional to the primary control variable ($T_{Luft}$) maximally until reaching its maximum power if the primary control variable ($T_{Luft}$) is above the predetermined upper primary control variable limit value ($T_{Luft,max}$).

5. Compressor system (1) according to any of the preceding claims, wherein the control device (30) is configured to activate the cooling device (40) in such a way that the cooling device (40) is operated at a power proportional to the secondary control variable (Toi) maximally until reaching its maximum power if the primary control variable ($T_{Luft}$) is below or equal to the predetermined upper primary control variable limit value ($T_{Luft, max}$) and the secondary control variable (Toi) is above the predetermined secondary control variable limit value (Toi, $_{min}$), or if the secondary control variable (Toi) is below or equal to the predetermined secondary control variable limit value ($T_{Öl, min}$) and the primary control variable ($T_{Luft}$) is above or equal to a predetermined lower primary control variable limit value ($T_{Luft}$,aus).

6. Compressor system (1) according to any of the preceding claims, wherein the control device (30) is configured to activate the cooling device (40) in such a way that the cooling device (40) is switched off if the secondary control variable ($T_{Öl}$) is below or equal to the predetermined secondary control variable limit value ($T_{Öl, min}$) and the primary control variable ($T_{Luft}$) is below a predetermined lower primary control variable limit value ($T_{Luft,aus}$).

7. Compressor system (1) according to any of the preceding claims, wherein the compressor system (1) comprises at least one air temperature detection unit (50a) detecting an air temperature and at least one oil temperature detection unit (50b) detecting an oil temperature, which units are connected for signalling to the control device (30), and wherein the control device (30) is configured to define the detected air temperature ($T_{Luft}$) as primary control variable ($T_{Luft}$) and the detected oil temperature ($T_{Öl}$) as secondary control variable ($T_{Öl}$) and/or vice versa.

8. Compressor system (1) according to claim 7, wherein the air temperature detection unit (50a) and the oil temperature detection unit (50b) are located at a respective output (10a, 11a) of the compressor (10).

9. Compressor system (1) according to any of the preceding claims, wherein the compressor system (1) is designed as an oil-lubricated compressor, in particular as an oil-lubricated screw compressor.

10. Method for controlling a cooling device (40) of a compressor system (1) according to any of claims 1 to 9, comprising the following steps:

- the detection of at least two control variables ($T_{Luft,}$ $T_{Öl}$) and
- the control of the cooling device (40) on the basis of the detected control variables ($T_{Luft,}$ $T_{Öl}$),wherein the control variable ($T_{Luft},T_{Öl}$) for the actuator and/or the actuator are/is dynamically adapted for the activation of the cooling device (40) in dependence on the detected control variables ($T_{Luft},T_{Öl}$),wherein the control device defines the one detected control variable as primary control variable ($T_{Luft}$) and the other detected control variable as secondary control variable ($T_{Öl}$) and activates the cooling device (40) in dependence on the primary control variable ($T_{Luft}$) if the primary control variable ($T_{Luft}$) is above a predetermined upper primary control variable limit value ($T_{Luft, max}$) or activates the cooling device (40) in dependence on the secondary control variable ($T_{Öl}$) if the primary control variable ($T_{Luft}$) is below or equal to a predetermined upper primary control variable limit value ($T_{Luft,max}$) and the secondary control variable ($T_{Öl}$) is above a predetermined secondary control variable limit value ($T_{Öl, min}$) or activates the cooling device (40) in dependence on the primary control variable ($T_{Luft}$) and the secondary control variable ($T_{Öl}$) if the primary control variable ($T_{Luft}$) is below or equal to the predetermined upper primary control variable limit value ($T_{Luft,max}$) and the secondary control variable

$(T_{Öl})$ is below the predetermined secondary control variable limit value $(T_{Öl, min})$.

11. Method according to claim 10, wherein the control device (30) activated the cooling device (40) as follows:

a) the cooling device (40) is operated at maximum power (P) if the primary control variable $(T_{Luft})$ is above a critical upper primary control variable limit value $(T_{Luft,krit.})$, which is in particular above the predetermined upper primary control variable limit value $(T_{Luft,max})$,

b) the cooling device (40) is operated at a power (P) proportional to the primary control variable $(T_{Luft})$ maximally until reaching its maximum power if the primary control variable $(T_{Luft})$ is above the predetermined upper primary control variable limit value $(T_{Luft, max})$,

c) the cooling device (40) is operated at a power (P) proportional to the secondary control variable $(T_{Öl})$ maximally until reaching its maximum power

if the primary control variable $(T_{Luft})$ is below or equal to the predetermined upper primary control variable limit value $(T_{Luft,max})$ and the secondary control variable $(T_{Öl})$ is above the predetermined secondary control variable limit value $(T_{Öl, min})$, or

if the secondary control variable $(T_{Öl})$ is below or equal to the predetermined secondary control variable limit value $(T_{Öl, min})$ and the primary control variable $(T_{Luft})$ is above or equal to a predetermined lower primary control variable limit value $(T_{Luft,aus})$ and/or

d) the cooling device (40) is switched off if the secondary control variable $(T_{Öl})$ is below or equal to the predetermined secondary control variable limit value $(T_{Öl, min})$ and the primary control variable $(T_{Luft})$ is below a predetermined lower primary control variable limit value $(T_{Luft,}aus)$.

12. Computer programme product with a programme code stored on a machine-readable carrier and designed, if executed on a data processing device, to prompt the data processing device to execute the method according to claim 10 or 11.

**Revendications**

1. Système (1) de compresseur, comportant :

un compresseur (10),
un dispositif (40) de refroidissement et

un montage (30) de commande

dans lequel le montage (30) de commande est configuré pour pouvoir commander le dispositif (40) de refroidissement indépendamment du fonctionnement du compresseur (10) et pour pouvoir adapter dynamiquement une grandeur $(T_{Luft}, T_{Öl})$ d'un organe de réglage et/ou l'organe de réglage à la commande du dispositif (40) de refroidissement,

dans lequel le montage (30) de commande est configuré pour recevoir au moins deux grandeurs $(T_{Luft}, T_{Öl})$ de commande, une grandeur de commande pouvant être fixée comme grandeur $(T_{Luft})$ de commande primaire et l'autre grandeur de commande comme grandeur $(T_{Öl})$ de commande secondaire, afin de commander le dispositif (40) de refroidissement, en fonction de la grandeur $(T_{Luft})$ de commande primaire et/ou de la grandeur $(T_{Öl})$ de commande secondaire, et

dans lequel le montage (30) de commande est configuré pour commander le dispositif (40) de refroidissement, en fonction de la grandeur $(T_{Luft})$ de commande primaire, si la grandeur $(T_{Luft})$ de commande primaire est inférieure à une valeur $(T_{Luft, max.})$ limite supérieure de grandeur de commande primaire,

ou pour commander le dispositif (40) de refroidissement en fonction de la grandeur $(T_{Öl})$ de commande secondaire, si la grandeur $(T_{Luft})$ de commande primaire est inférieure à une valeur $(T_{Luft, max.})$ limite supérieure de grandeur de commande primaire définie à l'avance ou lui est égale et si la grandeur $(T_{Öl})$ de commande secondaire est supérieure à une valeur $(T_{Öl, min.})$ limite de grandeur de commande secondaire définie à l'avance,

ou pour commander le dispositif (40) de refroidissement en fonction de la grandeur $(T_{Luft})$ de commande primaire et la grandeur $(T_{Öl})$ de commande secondaire, si la grandeur $(T_{Luft})$ de commande primaire est inférieure à la valeur $(T_{Luft, max.})$ limite supérieure de grandeur de commande primaire définie à l'avance ou lui est égale et si la grandeur $(T_{Öl})$ de commande secondaire est inférieure à la valeur $(T_{Öl, min.})$ limite de grandeur de commande secondaire définie à l'avance.

2. Système (1) de compresseur suivant la revendication 1, dans lequel le montage (30) de commande est configuré pour prescrire comme grandeur (P) de réglage un débit en volume du fluide de refroidissement, notamment un débit en volume de l'air de refroidissement.

3. Système (1) de compresseur suivant la revendication 1 ou 2, dans lequel le montage (30) de commande est configuré pour commander le dispositif (40) de refroidissement, de manière à faire fonctionner le dispositif (40) de refroidissement à une puissance maximum, si la grandeur ($T_{Luft}$) de commande primaire est supérieure à une valeur ($T_{Luft,\ krit.}$) limite critique supérieure de grandeur de commande primaire, qui est notamment supérieure à la valeur ($T_{Luft,\ max.}$) limite supérieure de grandeur de commande primaire définie à l'avance.

4. Système (1) de compresseur suivant l'une des revendications précédentes, dans lequel le montage (30) de commande est configuré pour commander le dispositif (40) de refroidissement, de manière à faire fonctionner le dispositif (40) de refroidissement au maximum, jusqu'à atteindre sa puissance maximum avec une puissance proportionnelle à la grandeur ($T_{Luft}$) de commande primaire, si la grandeur ($T_{Luft}$) de commande primaire est supérieure à la valeur ($T_{Luft,\ max.}$) limite supérieure de grandeur de commande primaire définie à l'avance.

5. Système (1) de compresseur suivant l'une des revendications précédentes, dans lequel le montage (30) de commande est configuré pour commander le dispositif (40) de refroidissement, de manière à faire fonctionner le dispositif (40) de refroidissement au maximum, jusqu'à atteindre sa puissance maximum avec une puissance proportionnelle à la grandeur ($T_{Öl}$) de commande secondaire, si la grandeur ($T_{Luft}$) de commande primaire est inférieure à la valeur ($T_{Luft,\ max.}$) limite supérieure de grandeur de commande primaire définie à l'avance ou lui est égale et si la grandeur ($T_{Öl}$) de commande secondaire est supérieure à la valeur ($T_{Öl,\ min.}$) limite de grandeur de commande secondaire définie à l'avance, ou si la grandeur ($T_{Öl}$) de commande secondaire est inférieure à la valeur ($T_{Öl,\ min.}$) limite de grandeur de commande secondaire définie à l'avance ou lui est égale et, si la grandeur ($T_{Luft}$) de commande primaire est supérieure à une valeur ($T_{Luft,\ aus}$) limite inférieure de grandeur de commande primaire définie à l'avance ou lui est égale.

6. Système (1) de compresseur suivant l'une des revendications précédentes, dans lequel le montage (30) de commande est configuré pour commander le dispositif (40) de refroidissement, de manière à mettre hors circuit le dispositif (40) de refroidissement, si la grandeur ($T_{Öl}$) de commande secondaire est inférieure à la valeur ($T_{Öl,\ min.}$) limite de grandeur de commande secondaire définie à l'avance ou lui est égale et si la grandeur ($T_{Luft}$) de commande primaire est inférieure à une valeur ($T_{Luft,\ aus}$) limite inférieure de grandeur de commande primaire définie à l'avance ou lui est égale.

7. Système (1) de compresseur suivant l'une des revendications précédentes, dans lequel le système (1) de compresseur comprend au moins une unité (50a) de détection de la température de l'air, qui détecte une température de l'air, et au moins une unité (50b) de détection de la température de l'huile, qui détecte une température de l'huile, qui sont reliées en technique du signal avec le montage (30) de commande, et dans lequel le montage (30) de commande est configuré pour déterminer la température ($T_{Luft}$) de l'air détectée comme grandeur ($T_{Luft}$) de commande primaire et la température ($T_{Öl}$) de l'huile détectée comme grandeur ($T_{Öl}$) de commande secondaire et/ou inversement.

8. Système (1) de compresseur suivant la revendication 7, dans lequel l'unité (50a) de détection de la température de l'air et l'unité (50b) de détection de la température de l'huile sont montées à une sortie (10a, 11a) respective du compresseur (10).

9. Système (1) de compresseur suivant l'une des revendications précédentes, dans lequel le système (1) de compresseur est constitué sous la forme d'un compresseur lubrifié à l'huile, notamment d'un compresseur à vis lubrifié à l'huile.

10. Procédé de commande d'un dispositif (40) de refroidissement d'un système (1) de compresseur suivant l'une des revendications 1 à 9, comprenant les stades :

    - détection d'au moins deux grandeurs ($T_{Luft}$, $T_{Öl}$) de commande,
    - commande du dispositif (40) de refroidissement sur la base des grandeurs ($T_{Luft}$, $T_{Öl}$) de commande détectées, la grandeur ($T_{Luft}$, $T_{Öl}$) de commande de l'organe de réglage et/ou l'organe de réglage étant adapté dynamiquement à la commande du dispositif (40) de refroidissement en fonction des grandeurs ($T_{Luft}$, $T_{Öl}$) de commande détectées, dans lequel le montage de commande détermine la une grandeur détectée comme grandeur ($T_{Luft}$) de commande primaire et l'autre grandeur de commande détectée comme grandeur ($T_{Öl}$) de commande secondaire et commande le dispositif (40) de refroidissement en fonction de la grandeur ($T_{Luft}$) de commande primaire, si la grandeur ($T_{Luft}$) de commande primaire est supérieure à une valeur ($T_{Luft,\ max.}$) limite supérieure de grandeur de commande primaire, ou commande le dispositif (40) de refroidissement en fonction de la grandeur ($T_{Öl}$) de commande secondaire, si la grandeur ($T_{Luft}$) de commande primaire est inférieure à une valeur ($T_{Luft,\ max.}$) limite supérieure de grandeur de commande primaire définie à l'avance ou lui est égale et si la grandeur ($T_{Öl}$) de commande secondaire est supérieure à une valeur ($T_{Öl, min.}$) limite de grandeur de commande secondaire définie à l'avance, ou commande le dispositif (40) de refroidissement en fonction de la grandeur ($T_{Luft}$) de commande primaire et de la grandeur ($T_{Öl}$) de commande secondaire, si la grandeur ($T_{Luft}$) de commande primaire est inférieure à la valeur ($T_{Luft, max.}$) limite supérieure de grandeur de commande primaire définie à l'avance ou lui est égale et si la grandeur ($T_{Öl}$) de commande secondaire est inférieure à la valeur ($T_{Öl, min.}$) limite de grandeur de commande secondaire définie à l'avance.

11. Procédé suivant la revendication 10, dans lequel le montage (30) de commande commande le dispositif (40) de refroidissement de la manière suivante :

a) on fait fonctionner le dispositif (40) de refroidissement à la puissance (P) maximum, si la grandeur ($T_{Luft}$) de commande primaire est supérieure à une valeur ($T_{Luft, krit.}$) limite critique supérieure de grandeur de commande primaire, qui est notamment supérieure à la valeur ($T_{Luft, max.}$) limite supérieure de grandeur de commande primaire définie à l'avance,

b) on fait fonctionner le dispositif (40) de refroidissement au maximum, jusqu'à atteindre sa puissance maximum avec une puissance (P) proportionnelle à la grandeur ($T_{Luft}$) de commande primaire, si la grandeur ($T_{Luft}$) de commande primaire est supérieure à la valeur ($T_{Luft, max.}$) limite supérieure de grandeur de commande primaire définie à l'avance,

c) on fait fonctionner le dispositif (40) de refroidissement au maximum, jusqu'à atteindre sa puissance maximum avec une puissance (P) proportionnelle à la grandeur ($T_{Öl}$) de commande secondaire,

si la grandeur ($T_{Luft}$) de commande primaire est inférieure à la valeur ($T_{Luft, max.}$) limite supérieure de grandeur de commande primaire définie à l'avance ou lui est égale et si la grandeur ($T_{Öl}$) de commande secondaire est supérieure à la valeur ($T_{Öl, min.}$) limite de grandeur de commande secondaire définie à l'avance, ou si la grandeur ($T_{Öl}$) de commande secondaire est inférieure à la valeur ($T_{Öl, min.}$) limite de grandeur de commande secondaire définie à l'avance ou lui est égale et si la grandeur ($T_{Luft}$) de commande primaire est supérieure à une valeur ($T_{Luft, aus}$) limite inférieure de grandeur de commande primaire définie à l'avance ou lui est égale, et/ou

d) on met hors circuit le dispositif (40) de refroidissement, si la grandeur ($T_{Öl}$) de commande secondaire est inférieure à la valeur ($T_{Öl, min.}$) limite de grandeur de commande secondaire définie à l'avance ou lui est égale et si la grandeur ($T_{Luft}$) de commande primaire est inférieure à une valeur ($T_{Luft, aus}$) limite inférieure de grandeur de commande primaire définie à l'avance.

12. Produit de programme d'ordinateur ayant un code de programme mis en mémoire sur un support déchiffrable par un ordinateur, qui est constitué pour, lorsqu'il est réalisé sur une installation de traitement de données, faire que l'installation de traitement de données effectue le procédé suivant la revendication 10 ou 11.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130129480 A1
- US 20040244393 A1
- DE 102013113557 A1